# EUROPÄISCHE PATENTSCHRIFT

(11) **EP 3 807 805 B1**
(45) Veröffentlichungstag und Bekanntmachung des Hinweises auf die Patenterteilung: **15.07.2026**
(21) Anmeldenummer: 19727283.4
(22) Anmeldetag: 08.05.2019
(51) Int. Cl.: G06N 3/0464, G08G 1/16, G08G 1/0965, G06V 20/58, G08G 1/0962, G06N 3/08, G06V 10/25

(54) **VERFAHREN ZUR DETEKTION VON KENNLEUCHTEN**
METHOD FOR DETECTING IDENTIFICATION LAMPS
PROCÉDÉ DE DÉTECTION DE GYROPHARES

(30) Priorität: 12.06.2018 DE 102018209306
(43) Veröffentlichungstag der Anmeldung: 21.04.2021
(73) Patentinhaber: AUMOVIO Autonomous Mobility Germany GmbH, 85057 Ingolstadt (DE)
(72) Erfinder: STRIGEL, Elias, 90411 Nürnberg (DE); PFITZER, Martin, 90411 Nürnberg (DE); HEINRICH, Stefan, 90411 Nürnberg (DE); KRÖKEL, Dieter, 90411 Nürnberg (DE)
(74) Vertreter: Aumovio Corporation
(86) Internationale Anmeldenummer: PCT/DE2019/200039
(87) Internationale Veröffentlichungsnummer: WO 2019/238177

(56) Entgegenhaltungen:
- EP-A1- 2 523 173
- DE-A1- 102007 013 664
- US-B1- 9 766 628

## Beschreibung

Die Erfindung betrifft ein Verfahren zur Detektion von Kennleuchten.

Aus dem Stand der Technik sind Verfahren bekannt, mittels welchen beispielsweise Ampelanlagen erkannt werden können, wobei dabei auch feststellbar ist, welche Farbe die Ampel anzeigt. Weiterhin ist bekannt andere Verkehrsteilnehmer aufgrund Ihrer Front- und/oder Heckleuchten zu erkennen. EP2523173A1 (AUTOLIV DEV [SE]) 14. November 2012, offenbart die Detektion einer periodisch blinkenden Kennleuchte eines Einsatzfahrzeugs mittels Bildverarbeitung.

Nachteilig bei den bekannten Verfahren ist, dass dadurch beispielsweise nur das Vorhandensein eines Fahrzeugs festgestellt, jedoch keine weitere Aussage über das Fahrzeug getroffen werden kann. Somit können unter anderem Einsatzfahrzeuge, wie z.B. ein Polizeifahrzeug, nicht erkannt werden. Allerdings erfordert ein solches Einsatzfahrzeug unter bestimmten Bedingungen ein besonderes Fahrerverhalten.

Es ist demnach eine Aufgabe der vorliegenden Erfindung ein Verfahren bereit zu stellen, mittels welchem die Erkennung von Einsatzfahrzeugen zuverlässig gewährleistet werden kann.

Diese Aufgabe wird durch den Gegenstand des Anspruchs 1 gelöst. Weitere Ausgestaltungen sind Gegenstand der Unteransprüche.

Erste Überlegungen waren dahingehend, dass die Erkennung von Einsatzfahrzeugen am zuverlässigsten über aktive Kennleuchten realisierbar ist. So ist beispielsweise das Blaulicht unter anderem charakteristisch für Polizei, Feuerwehr und Krankenwagen. Wenn eine aktive Kennleuchte erkannt wird, kann direkt auf ein Einsatzfahrzeug geschlossen werden.

Erfindungsgemäß wird demnach ein Verfahren zur Detektion von Kennleuchten in einer Umgebung eines Ego-Fahrzeugs vorgeschlagen mit den Schritten:
- Aufnehmen einer Folge von Kamerabildern eines Umgebungsausschnitts mittels eines Kamerasystems des Ego-Fahrzeugs,
- Detektion von hellen Lichtpunkten in dem aufgezeichneten Kamerabild,
- Ausschneiden von Bereichen mit den detektierten hellen Lichtpunkten in dem Kamerabild,
- Klassifizieren der ausgeschnittenen Bereiche,
- Einordnen der klassifizierten hellen Lichtpunkte als Kennleuchte, wenn zeitlich aufeinanderfolgend mehrfach die klassifizierten hellen Lichtpunkte detektiert werden und somit ein Schwellenwert eines Zählers überschritten wird.

Der Begriff Kennleuchte beschreibt dabei beispielsweise sogenannte Rundumkennleuchten, wie sie in Deutschland bei der Polizei Verwendung finden, oder aber auch Frontkennleuchten wie sie z.B. für Einsatzmotorräder oder auch bei Krankenwagen am Kühlergrill verwendet werden.

Bei dem Kamerasystem kann es sich um eine Monokamera, eine Stereokamera oder um ein Surroundview Kamerasystem handeln.

Unter hellen Lichtpunkten werden die 10 bis 50 hellsten Bereiche in einem bestimmten Farbkanal verstanden. Ist die Nachbarschaft um einen Pixel ebenso hell gilt dies als Bereich und wird nur einmal dem Klassifikator zugeführt und zählt somit nur einmal zu den 10 bis 50 hellsten Bereichen. Auf diese Weise wird verhindert, dass alle hellen Bereiche einer Lampe zugeordnet werden.

Bei dem hier verwendeten Schwellenwert eines Zählers handelt es sich um eine bestimmte Anzahl an Detektionen von klassifizierten Lichtpunkten, welche vorliegen muss, um auf eine Kennleuchte schließen zu können. Wichtig ist hierbei, dass nur die entsprechend klassifizierten Lichtpunkte betrachtet werden, da hierbei nur eine oder mehrere bestimmte Farben relevant sind.

Dadurch wird beispielsweise verhindert, dass ein Blinker irrtümlicherweise als Kennleuchte identifiziert wird.

In einer besonders bevorzugten Ausführungsform wird zum Klassifizieren ein Neuronales Netzwerk verwendet.

Besonders bevorzugt bildet das Neuronale Netzwerk einen Klassifikator für Licht, insbesondere farbiges Licht. Besonders bevorzugt handelt es sich bei dem farbigen Licht um blaues Licht. In dieser Ausführungsform werden speziell die hellsten Bereiche bzw. Maxima in einem bestimmten Kanal, bei blauem Licht im Blaukanal betrachtet. Für andere Farben, wie beispielsweise Rot, würden dann die Maxima im Rotkanal betrachtet werden. Es kann jeweils ein Klassifikator für jeweils eine Farbe verwendet werden. Die verschiedenen Klassifikatoren können dann auch parallel angewandt werden, um beispielsweise eine kombinierte Kennleuchte aus Blau und Rot, wie unter anderem in den USA verwendet, zuverlässig erkennen zu können. Denkbar wäre auch, einen Klassifikator mit mehreren Klassen zu trainieren, so dass ein einzelner Klassifikator für verschiedene Farben verwendet werden kann.

Bevorzugt weist der zumindest eine Klassifikator einen Ausgang auf, mittels welchem eine Farbe des Lichts ausgegeben wird. Dies ist insbesondere bei der Verwendung mehrerer Klassifikatoren für unterschiedliche Farben vorteilhaft.

Bevorzugt wird in einem weiteren Schritt die Information über eine Kennleuchte einem Fahrer und/oder einem Fahrerassistenzsystem bereitgestellt. Die Information kann einem Fahrer beispielsweise optisch über ein Head-Up-Display oder eine in bzw. am Armaturenbrett befindliche Anzeige bereitgestellt werden. Alternativ oder kumulativ kann weiterhin ein akustischer Hinweis erfolgen. Das Bereitstellen der Information für einen Fahrer ist dahingehend vorteilhaft, da dieser aufgrund der Information ggf. ein entsprechendes Fahrmanöver durchführen kann und/oder die Aufmerksamkeit bezüglich eines potentiell abweichenden Fahrverhaltens der anderen Verkehrsteilnehmer erhöht wird. Weiterhin ist die Bereitstellung für ein Fahrerassistenzsystem vorteilhaft, da auf diese Weise das Ego-Fahrzeug beispielsweise autonom Maßnahmen zur Bildung einer Gasse für das Einsatzfahrzeug ergreifen kann.

In einer Ausführung wird ein Zähler nach jeder Detektion der klassifizierten Lichtpunkte inkrementiert und bei einer ausbleibenden Detektion dekrementiert. Der Zähler wird demnach solange inkrementiert bis eine gewisse Anzahl an positiven Detektionen vorliegt. Also positive Detektionen werden Detektionen bezeichnet welche als Einsatzlicht eines Einsatzfahrzeugs klassifiziert wurden. Wird dagegen beispielsweise nur einmal ein Einsatzlicht eines Einsatzfahrzeugs detektiert, wird der Zähler zwar zunächst erhöht, überschreitet dieser Zähler danach aber nicht den Schwellwert, wird dieser wieder dekrementiert. Der Anfangswert liegt beispielsweise bei 1 welcher somit ab der ersten Detektion überschritten und somit auch inkrementiert wird. Ein Höchstwert kann beispielsweise bei 3 liegen. Somit würde der Zähler von 1 zweimal inkrementiert auf 3 und die vierte Detektion wäre dann ausschlaggebend für die Einordnung der Detektionen als Kennleuchte. Ein derart ausgestaltetes Verfahren ist besonders vorteilhaft, da auf diese Weise die Ausgabe von False-Positives unterdrückt werden kann.

Weitere vorteilhafte Ausgestaltungen sind Bestandteil der Zeichnungen.

Darin zeigen:
Fig. 1 eine schematische Darstellung einer beispielhaften Verkehrssituation;
Fig. 2 einen schematischen Ablauf einer bevorzugten Ausführungsform des Verfahrens.

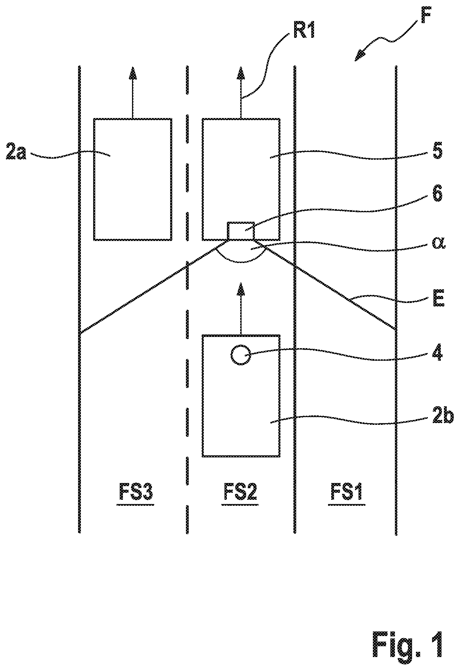

Figur 1 zeigt eine schematische Darstellung einer beispielhaften Verkehrssituation. In dieser Verkehrssituation befindet sich ein Ego-Fahrzeug 5 auf der Fahrspur FS2 sowie ein weiteres Fahrzeug 2a auf der Fahrspur FS3 neben dem Ego-Fahrzeug 5 und ein weiteres Fahrzeug 2b auf der Fahrspur FS2 hinter dem Ego-Fahrzeug 5 auf einer Fahrbahn F. Die drei Fahrzeuge bewegen sich dabei in dieselbe Bewegungsrichtung R1. Die Fahrbahn umfasst zusätzlich einem Standstreifen FS1. Das Ego-Fahrzeug weist dabei eine Kamera 6 mit einem Erfassungsbereich E und einem Öffnungswinkel α auf, welche beispielsweise als Bestandteil eines Surroundview Kamerasystems nach hinten gerichtet ist. Das weitere Fahrzeug 2b umfasst eine Kennleuchte 4, welche beispielsweise als Rundumkennleuchte ausgebildet ist. Das weitere Fahrzeug 2b wird mittels der Kamera 6 des Ego-Fahrzeugs 5 erfasst und in dem so aufgezeichneten Bild werden helle Lichtpunkte detektiert, um das Vorhandensein der Kennleuchte 4 zu ermitteln. Wird eine aktive Kennleuchte 4 des weiteren Fahrzeugs 2b ermittelt, kann das Ego-Fahrzeug beispielsweise auf den Standstreifen FS1 ausweichen, um eine Gasse für das als Einsatzfahrzeug eingestufte weitere Fahrzeug 2b zu bilden.

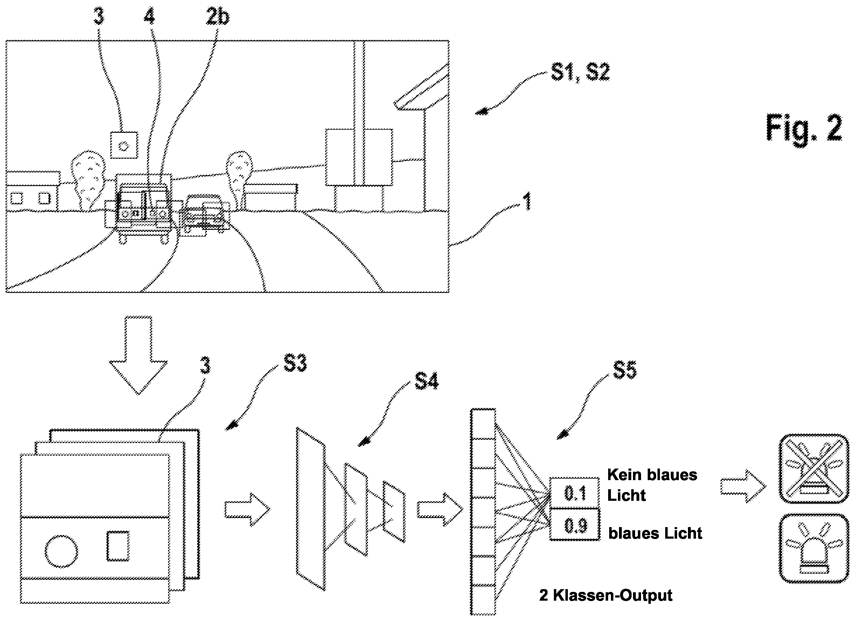

Figur 2 zeigt einen schematischen Ablauf einer bevorzugten Ausführungsform des Verfahrens. In Schritt S1 wird eine Folge von Kamerabildern 1 eines Umgebungsausschnitts mittels eines Kamerasystems 6 eines Ego-Fahrzeugs 5 aufgezeichnet. In Schritt S2 werden helle Lichtpunkte bzw. Bereiche 3 in dem aufgezeichneten Kamerabild 1 detektiert. In einem darauffolgenden Schritt S3 werden die Bereiche mit hellen Lichtpunkten in dem Kamerabild 1 ausgeschnitten. Diese ausgeschnittenen Bereiche 3 werden daraufhin in Schritt S4 klassifiziert. Anschließend werden in Schritt S5 die hellen Lichtpunkte als Kennleuchte 4 eingeordnet, wenn zeitlich aufeinanderfolgend mehrfach die klassifizierten hellen Lichtpunkte detektiert werden und somit ein Schwellenwert überschritten wird. Die Kennleuchten 4 befinden sich in dem hier dargestellten aufgezeichneten Kamerabild an der Front des Fahrzeugs 2b.

### Bezugszeichenliste

- 1: Kamerabild
- 2a, 2b: weiteres Fahrzeug
- 3: Bereich
- 4: Kennleuchte
- 5: Ego-Fahrzeug
- 6: Kamerasystem
- E: Erfassungsbereich
- F: Fahrbahn
- FS1-FS3: Fahrspur
- R1: Bewegungsrichtung Ego-Fahrzeug
- S1-S5: Verfahrensschritte

## Patentansprüche

1. Verfahren zur Detektion von Kennleuchten (4) in einer Umgebung eines Ego-Fahrzeugs (5) mit den Schritten:
- Aufnehmen (S1) einer Folge von Kamerabildern (1) eines Umgebungsausschnitts mittels eines Kamerasystems (6) des Ego-Fahrzeugs (5),
- Detektion (S2) von hellen Lichtpunkten in jedem aufgezeichneten Kamerabild (1) der Folge von Kamerabildern (1), wobei die hellen Lichtpunkte die 10 bis 50 hellsten Bereiche in zumindest einem bestimmten Farbkanal beschreiben,
- Ausschneiden (S3) von Bereichen (3) mit den detektierten hellen Lichtpunkten in jedem Kamerabild (1) der Folge von Kamerabildern (1),
- Klassifizieren (S4) der ausgeschnittenen Bereiche (3) basierend auf einer oder mehrerer bestimmter Farben,
- Einordnen (S5) der hellen Lichtpunkte als Kennleuchte (4), wenn wiederkehrend die klassifizierten hellen Lichtpunkte detektiert werden und somit ein Schwellenwert eines Zählers überschritten wird, wobei der Zähler nach jeder Detektion der klassifizierten Lichtpunkte inkrementiert und bei einer ausbleibenden Detektion dekrementiert wird.

2. Verfahren nach Anspruch 1,
wobei zum Klassifizieren ein Neuronales Netzwerk verwendet wird.

3. Verfahren nach Anspruch 2,
wobei das Neuronale Netzwerk zumindest einen Klassifikator für Licht, insbesondere farbiges Licht bildet.

4. Verfahren nach Anspruch 3,
wobei der zumindest eine Klassifikator einen Ausgang aufweist, mittels welchem eine Farbe des Lichts ausgegeben wird.

5. Verfahren nach Anspruch 1,
wobei in einem weiteren Schritt die Information über eine Kennleuchte (4) einem Fahrer und/oder einem Fahrerassistenzsystem bereitgestellt wird.

## Claims

1. A method for detecting identification lamps (4) in an environment of an ego vehicle (5), having the steps of:
- recording (S1) a sequence of camera images (1) of a section of surroundings by means of a camera system (6) of the ego vehicle (5),
- detection (S2) of bright light points in each recorded camera image (1) of the sequence of camera images (1), wherein the bright light points describe the 10 to 50 brightest regions in at least one specific colour channel,
- cutting out (S3) regions (3) having the detected bright light points in each camera image (1) of the sequence of camera images (1),
- classifying (S4) the cut-out regions (3) on the basis of one or more specific colours,
- categorizing (S5) the bright light points as an identification lamp (4) if the classified bright light points are detected repeatedly and a threshold value of a counter is thus exceeded, wherein the counter is incremented after each detection of the classified light points and decremented if a detection does not occur.

2. The method according to claim 1,
wherein a neural network is used for classification.

3. The method according to claim 2,
wherein the neural network forms at least one classifier for light, in particular coloured light.

4. The method according to claim 3,
wherein the at least one classifier has an output by means of which a colour of the light is output.

5. The method according to claim 1,
wherein, in a further step, the information is made available to a driver and/or to a driver assistance system by means of an identification lamp (4).

## Revendications

1. Procédé de détection de gyrophares (4) dans un environnement d'un véhicule Ego (5) comprenant les étapes suivantes :
- l'enregistrement (S1) d'une séquence d'images de caméra (1) d'une section d'environnement au moyen d'un système de caméra (6) du véhicule Ego (5),
- la détection (S2) de points lumineux brillants dans chaque image de caméra enregistrée (1) de la séquence d'images de caméra (1), dans lequel les points lumineux brillants décrivent les 10 à 50 zones les plus brillantes dans au moins un canal de couleur spécifique,
- le découpage (S3) des zones (3) avec les points lumineux brillants détectés dans chaque image de caméra (1) de la séquence d'images de caméra (1),
- la classification (S4) des zones découpées (3) en fonction d'une ou de plusieurs couleurs spécifiques,
- la catégorisation (S5) des points lumineux brillants comme gyrophares (4) lorsque les points lumineux brillants classés sont détectés de manière répétée et qu'une valeur seuil d'un compteur est ainsi dépassée, dans lequel le compteur est incrémenté après chaque détection des points lumineux classés et est décrémenté si aucune détection ne se produit.

2. Procédé selon la revendication 1,
dans lequel un réseau neuronal est utilisé pour la classification.

3. Procédé selon la revendication 2,
dans lequel le réseau neuronal forme au moins un classificateur pour la lumière, en particulier la lumière colorée.

4. Procédé selon la revendication 3,
dans lequel ledit au moins un classificateur possède une sortie au moyen de laquelle une couleur de la lumière est produite.

5. Procédé selon la revendication 1,
dans lequel, dans une étape ultérieure, l'information sur un gyrophare (4) est fournie à un conducteur et/ou à un système d'assistance à la conduite.
